# FASCICULE DE BREVET EUROPEEN

(11) **EP 2 714 431 B1**
(45) Date de publication et mention de la délivrance du brevet: **08.07.2015**
(21) Numéro de dépôt: 12723450.8
(22) Date de dépôt: 22.05.2012
(51) Int. Cl.: B60C 11/03, B60C 11/11

(54) **BANDE DE ROULEMENT DE PNEUMATIQUE POUR TRACTEUR AGRICOLE**
REIFENLAUFFLÄCHE FÜR EINEN ACKERSCHLEPPER
TIRE TREAD FOR A FARM TRACTOR

(30) Priorité: 25.05.2011 FR 1154556
(43) Date de publication de la demande: 09.04.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VERVAET, Patrick, F-63040 Clermont-Ferrand Cedex 9 (FR); BUFFETAUD, Benoit, F-63040 Clermont-Ferrand Cedex 9 (FR); LARREGAIN, Arnaud, F-63040 Clermont-Ferrand Cedex 9 (FR)
(74) Mandataire: Millanvois, Patrick Jacques Jean
(86) Numéro de dépôt international: PCT/EP2012/059488
(87) Numéro de publication internationale: WO 2012/160060

(56) Documents cités:
- US-A- 4 131 148

## Description

La présente invention concerne un pneumatique pour véhicule à usage agricole, tel qu'un tracteur agricole ou un véhicule agro-industriel.

Elle concerne plus particulièrement la bande de roulement d'un tel pneumatique, destinée à entrer à contact avec un sol par l'intermédiaire d'une surface de roulement.

Dans ce qui suit, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Le plan équatorial du pneumatique est le plan passant par le milieu de la bande de roulement du pneumatique et perpendiculaire à l'axe de rotation du pneumatique. Un plan axial est un plan parallèle à l'axe de rotation du pneumatique : il est défini par les directions circonférentielle et axiale.

Un pneumatique pour tracteur agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour tracteur agricole, et en particulier sa bande de roulement, doit présenter un compromis de performances entre la traction en champ, la résistance aux arrachements, la résistance à l'usure sur route, la résistance au roulement, le confort vibratoire sur route.

Pour satisfaire cet ensemble de performances, la bande de roulement d'un pneumatique pour tracteur agricole comprend généralement une pluralité de barrettes. Les barrettes sont des éléments en relief par rapport à une surface de fond de la bande de roulement, de révolution autour de l'axe de rotation du pneumatique, et s'étendant radialement jusqu'à la surface de roulement.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans la surface de contact du pneumatique avec le sol, est appelée face de contact de la barrette.

Selon la direction axiale, une barrette s'étend vers l'intérieur à partir d'une extrémité axiale de la bande de roulement. Généralement, une barrette s'étend axialement vers l'intérieur à partir d'une face d'extrémité axialement extérieure jusqu'à une face d'extrémité axialement intérieure, plus proche du plan équatorial du pneumatique.

Selon la direction circonférentielle, une barrette s'étend, selon un sens de rotation préférentiel du pneumatique, entre une face d'attaque et une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite.

On peut décrire les faces d'attaque et de fuite d'une barrette, par les courbes d'intersection de la barrette avec un plan axial, parallèle à l'axe de rotation du pneumatique, coupant la barrette. Une barrette comprend ainsi, dans tout plan axial, un profil d'attaque, intersection de la face d'attaque et du plan axial, et un profil de fuite, intersection de la face de fuite et du plan axial. La définition des profils d'attaque et de fuite, dans tout plan axial coupant la barrette et compris entre la surface de fond et la surface de roulement, permet de définir les faces d'attaque et de fuite.

Une barrette a usuellement un angle d'inclinaison moyen, par rapport à la direction circonférentielle, proche de 45°, l'angle d'inclinaison moyen étant l'angle de la droite passant par les extrémités axiales de la barrette. En effet, cet angle d'inclinaison moyen permet en particulier un compromis entre la traction en champ et le confort vibratoire. La traction en champ est d'autant meilleure que la barrette est radiale, c'est-à-dire que son angle d'inclinaison moyen est proche de 90°, alors que le confort vibratoire est d'autant meilleur que la barrette est longitudinale, c'est-à-dire que son angle d'inclinaison moyen est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement radiale à l'épaule et sensiblement longitudinale au milieu de la bande de roulement.

La bande de roulement d'un pneumatique pour tracteur agricole comprend usuellement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Diverses conceptions de bande de roulement à barrettes ont été proposées, selon l'amélioration de performances recherchée, comme le montrent, à titre d'exemples, les documents cités ci-après. Le document US4131148 présente une surface de fond à facettes pour améliorer la traction en champ et l'auto nettoyage de la bande de roulement. Le document US4611647 propose une barrette avec une face d'attaque dont le profil circonférentiel, selon un plan circonférentiel, parallèle au plan équatorial, est convexe et curviligne, afin d'améliorer la résistance à l'usure, l'efficacité et la durée de vie. Le document US5010935 décrit une barrette dont la face d'attaque à un profil circonférentiel concave à double pente, pour une meilleure traction en champ et une meilleure résistance à l'arrachement. Le document JP11115417 décrit une barrette dont la face d'attaque à un profil circonférentiel convexe à double pente, pour améliorer la traction en champ et l'auto nettoyage de la bande de roulement.

Toutefois, les bandes de roulement à barrettes usuelles peuvent être sensibles à une agression particulière: l'agression par les chaumes résiduels dans les champs après la récolte. Un chaume est une portion de tige de plante dont l'extrémité libre est acérée. L'extrémité libre acérée d'un chaume, qui entre en contact avec la face d'attaque d'une barrette, la perfore localement et superficiellement, ce qui entraîne un arrachement local du matériau polymérique à base d'élastomère ou élastomérique, constitutif de la barrette. Les agressions répétées des faces d'attaque des barrettes par des chaumes peuvent provoquer une dégradation importante de l'aspect des barrettes, voire des arrachements notamment au niveau des extrémités axialement extérieures des barrettes. Ces dégradations sont susceptibles d'entraîner des réclamations de la part des utilisateurs et le remplacement du pneumatique.

La présente invention a pour objectif de diminuer les agressions des faces d'attaque des barrettes de bande de roulement d'un pneumatique à usage agricole, au niveau de leurs extrémités axialement extérieures, par des chaumes résiduels après récolte, et de réduire ainsi le risque d'arrachement des extrémités axialement extérieures des barrettes.

Ce but a été atteint selon l'invention par un pneumatique pour véhicule à usage agricole comprenant:
- une bande de roulement comprenant une pluralité de barrettes,
- une barrette s'étendant radialement vers l'extérieur à partir d'une surface de fond de la bande de roulement sur une hauteur de barrette, axialement vers l'intérieur à partir d'une extrémité axiale de la bande de roulement et circonférentiellement, selon un sens de rotation préférentiel du pneumatique, entre une face d'attaque et une face de fuite,
- une barrette comprenant, dans tout plan axial, parallèle à l'axe de rotation du pneumatique, un profil d'attaque, intersection de la face d'attaque et du plan axial, et un profil de fuite, intersection de la face de fuite et du plan axial,
l'angle de la droite tangente au profil d'attaque, en un point du profil d'attaque, par rapport à un plan équatorial du pneumatique passant par le milieu de la bande de roulement, augmentant continûment, à partir d'un point le plus axialement extérieur du profil d'attaque, lorsque la distance axiale entre le point du profil d'attaque et le point le plus axialement extérieur du profil d'attaque augmente, l'angle atteignant une valeur maximale en un point d'inflexion du profil d'attaque, et le rayon de courbure en tout point du profil d'attaque, positionné axialement entre le point le plus axialement extérieur et le point d'inflexion, étant au moins égal à 0.4 fois la hauteur de barrette.

L'invention est essentiellement basée sur la forme de la portion de face d'attaque axialement extérieure de la barrette. La portion de face d'attaque axialement extérieure est décrite par le profil d'attaque dans un plan axial coupant la barrette. Le plan axial considéré est radialement positionné entre la surface de fond et la surface de roulement, et radialement à l'extérieur de la surface de raccordement entre la face d'attaque et la surface de fond.

Selon l'invention, l'angle de la droite tangente au profil d'attaque, en un point du profil d'attaque, par rapport à un plan équatorial du pneumatique passant par le milieu de la bande de roulement, augmente continûment, à partir d'un point le plus axialement extérieur du profil d'attaque, lorsque la distance axiale entre le point du profil d'attaque et le point le plus axialement extérieur du profil d'attaque augmente. En d'autres termes, au point le plus axialement extérieur du profil d'attaque, c'est-à-dire axialement positionné sur l'extrémité axialement extérieure de la barrette, la droite tangente au profil d'attaque a une valeur minimale proche de 0°. L'angle de la droite tangente au profil d'attaque est mesuré par rapport au plan équatorial, ou par rapport à la direction circonférentielle, le plan équatorial étant par définition le plan circonférentiel passant par le milieu de la bande de roulement. L'angle de la droite tangente au profil d'attaque va ensuite augmenter continûment en tout point du profil d'attaque jusqu'à atteindre une valeur maximale en un point du profil d'attaque appelé point d'inflexion, où la courbure du profil d'attaque s'inverse. Enfin, axialement à l'intérieur de ce point d'inflexion, l'angle de la droite tangente va diminuer progressivement.

En raisonnant en terme de courbure, la portion de profil d'attaque, comprise entre le point le plus axialement extérieur et le point d'inflexion, est convexe, c'est-à-dire que le centre de courbure en tout point est positionné en arrière du profil d'attaque, du côté du profil de fuite et la courbure est de signe constant. La courbure s'annule au point d'inflexion I. Axialement à l'intérieur du point I, le centre de courbure en un point du profil d'attaque est positionné en avant du profil d'attaque, du côté opposé au profil de fuite, et la courbure est de signe opposée: la portion de profil d'attaque axialement intérieur au point d'inflexion est dite concave. Dans un cas limite, la courbure dans la portion de profil d'attaque axialement intérieure au point d'inflexion peut être nulle, ce qui correspond à une portion de profil d'attaque rectiligne.

La forme du profil d'attaque, dans un plan axial donné, étant similaire dans tout plan axial coupant la barrette, la face d'attaque comprend, selon la direction axiale, de part et d'autre d'une ligne de partage, des surfaces élémentaires ayant des courbures, dans un plan axial, de signe opposé.

Une autre caractéristique essentielle de l'invention est que le rayon de courbure en tout point du profil d'attaque, positionné axialement entre le point le plus axialement extérieur et le point d'inflexion, est au moins égal à 0.4 fois la hauteur de barrette. La hauteur de barrette est la distance radiale moyenne mesurée entre la surface de fond de la bande roulement et la face radialement la plus extérieure de la barrette, appartenant à la surface de roulement. Cette caractéristique garantit une convexité minimale évitant d'avoir un rayon de courbure trop petit entraînant localement une discontinuité de la tangente, donc un point anguleux. En d'autres termes, les inventeurs cherchent à éviter une arête vive à l'extrémité axialement extérieure de la face d'attaque.

La forme convexe de la face d'attaque de la barrette, au niveau de son extrémité axialement extérieure, permet avantageusement de dévier axialement vers l'extérieur l'extrémité acérée et agressive de tout chaume ayant un impact dans cette zone, et de l'évacuer vers l'extérieur de la bande de roulement. Cette déviation de l'extrémité de chaume évite à celle-ci de perforer le mélange élastomérique de la barrette, ce qui garantit l'intégrité dudit matériau dans cette zone d'extrémité de barrette et donc la tenue mécanique de l'extrémité de barrette. Un rayon de courbure minimal de la barrette, proportionnel à la hauteur de barrette, est nécessaire pour éviter tout blocage intempestif de l'extrémité de chaume par une arête vive, c'est-à-dire par une zone de raccordement sans congé de raccordement ou avec un congé de raccordement à petit rayon de courbure, par exemple inférieur à 3 mm.

Un autre avantage de l'invention est de permettre une meilleure évacuation de la terre contenue dans les sillons séparant deux barrettes, grâce à la forme convexe et sans arête vive de l'extrémité axialement extérieure de barrette qui facilite l'écoulement de la terre axialement vers l'extérieur de la bande de roulement.

Il est également avantageux que la distance axiale entre le point d'inflexion du profil d'attaque et le plan équatorial du pneumatique soit au moins égale à 0.8 fois la distance axiale entre le point le plus axialement extérieur du profil d'attaque et le plan équatorial du pneumatique. En effet, ce n'est qu'à partir d'une certaine distance axiale par rapport au plan équatorial que l'agression de la face d'attaque d'une barrette par l'extrémité d'un chaume est essentiellement dommageable. En deçà de cette valeur, une forme convexe du profil d'attaque n'est pas utile car on est trop éloigné de l'extrémité axialement extérieure de barrette. Par ailleurs, une distance axiale inférieure à cette valeur serait susceptible d'affaiblir mécaniquement la barrette et de la sensibiliser aux arrachements.

La distance axiale entre le point d'inflexion du profil d'attaque et le plan équatorial du pneumatique est encore avantageusement au plus égale à 0.95 fois la distance axiale entre le point le plus axialement extérieur du profil d'attaque et le plan équatorial du pneumatique. Au-delà de cette distance axiale maximale, la longueur axiale de portion convexe de profil d'attaque est insuffisante pour garantir la protection de l'extrémité axialement extérieure de barrette, car le nombre d'extrémités de chaume déviées et évacuées est insuffisant pour obtenir une baisse significative des agressions en extrémité axialement extérieure de barrette.

Selon un mode de réalisation avantageux, la distance circonférentielle entre le point le plus axialement extérieur du profil d'attaque et le profil de fuite est au plus égale à 0.5 fois la distance entre le point d'inflexion du profil d'attaque et le profil de fuite, mesurée perpendiculairement au profil de fuite. La distance circonférentielle entre le point le plus axialement extérieur du profil d'attaque et le profil de fuite, mesurée selon la direction circonférentielle, définit l'épaisseur en extrémité axialement extérieure de barrette. La distance entre le point d'inflexion du profil d'attaque et le profil de fuite, mesurée perpendiculairement au profil de fuite, définit l'épaisseur de barrette au niveau du point d'inflexion. Usuellement l'épaisseur de barrette au niveau du point d'inflexion varie assez peu pour les points axialement intérieurs au point d'inflexion: l'épaisseur de barrette est sensiblement constante. Une épaisseur en extrémité axialement extérieure de barrette implique la présence d'une face d'extrémité axialement extérieure de barrette et garantit une rigidité de flexion de l'extrémité axialement extérieure de barrette. Une épaisseur en extrémité axialement extérieure de barrette ayant une valeur maximale garantit simultanément une déviation de l'extrémité de chaume et une rigidité mécanique de l'extrémité axialement extérieure de barrette. Dans le cas limite où la distance entre le point le plus axialement extérieur du profil d'attaque et le profil de fuite est nulle, la face d'extrémité axialement extérieure de barrette n'existe plus et la face d'attaque est directement reliée à la face de fuite, au niveau de l'extrémité axialement extérieure de barrette.

L'angle de la droite tangente au profil d'attaque, au point le plus axialement extérieur du profil d'attaque, par rapport au plan équatorial du pneumatique, est avantageusement au plus égal à 5°. Il en résulte que la droite tangente au profil d'attaque en ce point est quasi circonférentielle et, par conséquent, dans le plan de la face d'extrémité axialement extérieure de barrette. Ceci garantit un raccordement progressif et sans arête entre la face d'attaque et la face d'extrémité axialement extérieure de barrette.

Selon un autre mode de réalisation avantageux, l'angle de la droite tangente au profil d'attaque, au point d'inflexion du profil d'attaque, par rapport au plan équatorial du pneumatique, est au moins égal à 40°, de préférence au moins égal à 45°. En deçà de cette valeur minimale, la direction moyenne de la barrette se rapproche trop de la direction circonférentielle au niveau de l'extrémité axialement extérieure de barrette, ce qui dégrade les performances usuelles de la barrette.

Il est également avantageux que l'angle de la droite tangente au profil d'attaque, au point d'inflexion du profil d'attaque, par rapport au plan équatorial du pneumatique, soit au plus égal à 75°, de préférence au plus égal à 55°. Au-delà de cette valeur maximale, l'extrémité de chaume risque d'être bloquée en raison d'une inclinaison insuffisante de la barrette.

Il est enfin avantageux que la face d'attaque soit reliée à la surface de fond par un raccordement continu et tangent à la surface de fond. Cette caractéristique permet d'éviter toute arête vive en pied de barrette, y compris au niveau de l'extrémité extrémité axialement extérieure de barrette, susceptible de faire obstacle à la déviation de l'extrémité de chaume.

Une bande de roulement de pneumatique comprenant une pluralité de barrettes, constituée d'une première et d'une seconde rangées de barrettes disposées en chevrons par rapport au plan équatorial du pneumatique, est avantageusement configurée selon les caractéristiques de l'invention précédemment décrite.

La présente invention sera mieux comprise à l'aide des figures 1 à 5 présentées ci-après :
- la figure 1 présente une vue en perspective d'un pneumatique selon l'invention,
- la figure 2 présente une vue en perspective d'une extrémité axialement extérieure de barrette d'un pneumatique de référence,
- la figure 3 présente une vue en perspective d'une extrémité axialement extérieure de barrette d'un pneumatique selon l'invention,
- la figure 4 présente une vue en perspective d'une barrette d'un pneumatique selon l'invention,
- la figure 5 présente une coupe dans un plan axial d'une barrette d'un pneumatique selon l'invention.

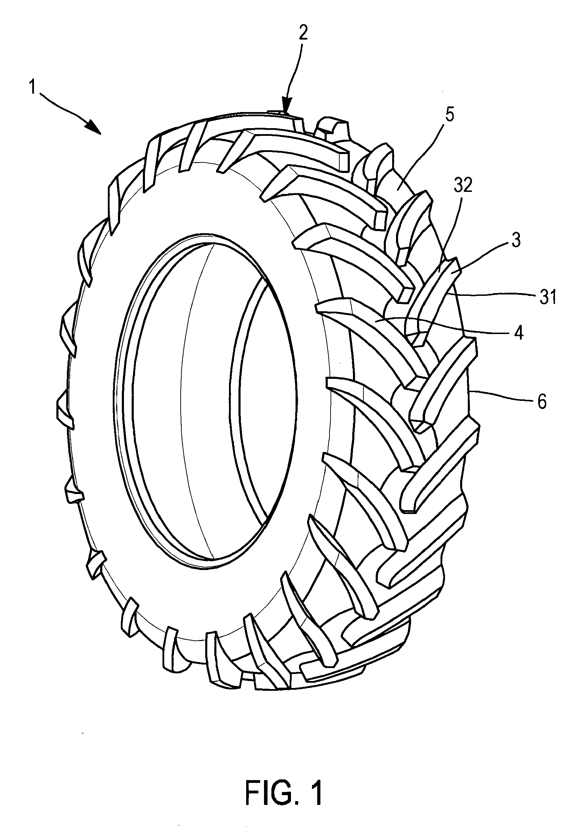

La figure 1 présente une vue en perspective d'un pneumatique 1 selon l'invention. La bande de roulement 2 du pneumatique comprend une pluralité de barrettes (3,4). Dans le cas présent, la pluralité de barrettes est répartie en une première rangée de barrettes 3 et une deuxième rangée de barrettes 4, symétriques par rapport au plan équatorial du pneumatique et disposées en chevrons. Une barrette (3, 4) s'étend radialement vers l'extérieur à partir d'une surface de fond 5 de la bande de roulement 2, de révolution autour de l'axe de rotation du pneumatique, sur une hauteur de barrette. La barrette 3 s'étend axialement vers l'intérieur à partir d'une extrémité axiale 6 de la bande de roulement 2. La barrette 3 s'étend circonférentiellement, selon un sens de rotation préférentiel du pneumatique 1, à partir d'une face d'attaque 31 jusqu'à une face de fuite 32. Dans le pneumatique représenté sur la figure 1, le sens de rotation préférentiel est indiqué par la pointe des chevrons selon lesquels sont disposées les barrettes.

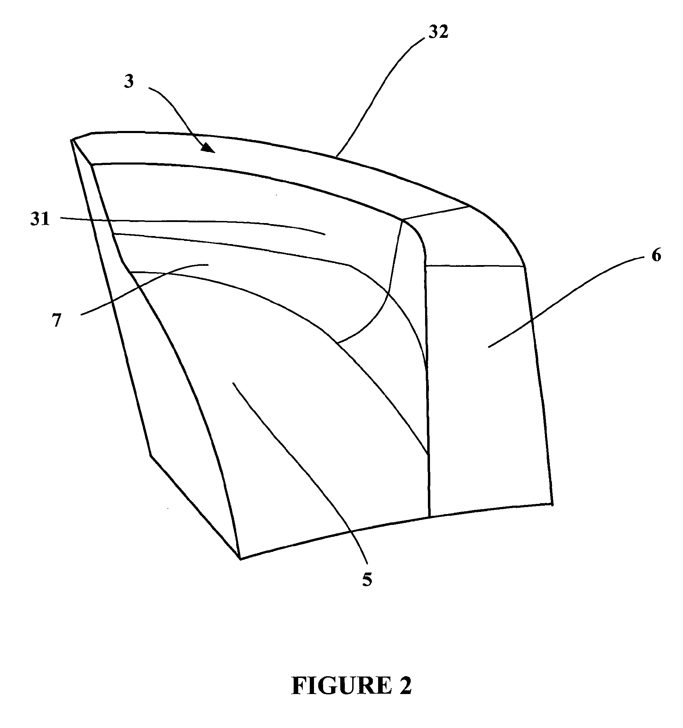

La figure 2 présente une vue en perspective d'une extrémité axialement extérieure de barrette d'un pneumatique de référence usuel. La barrette 3 comprend une face d'attaque 31, une face de fuite 32 et une face axialement extérieure à l'extrémité axiale 6 de la bande de roulement. La barrette 3 s'étend radialement vers l'extérieur à partir d'une surface de fond 5 de la bande de roulement. La face d'attaque 6 est reliée à la surface de fond 5 par une surface de raccordement 7 comprenant un congé de raccordement. Dans le pneu de référence, la face d'attaque 6 est reliée à l'extrémité axiale 6 par une arête vive, caractérisée par un rayon de raccordement très petit, par exemple de l'ordre de 1 à 3 mm. La face d'attaque, présentée sur la figure 2, a une forme curviligne concave, c'est-à-dire que le centre de courbure du profil d'attaque, intersection de la face d'attaque par un plan axial, en un point donné du profil d'attaque est en avant par rapport à la face d'attaque 31, du côté opposé à la face de fuite 32. Dans cette configuration, une extrémité de chaume est difficilement évacuée vers l'extérieur de la bande de roulement.

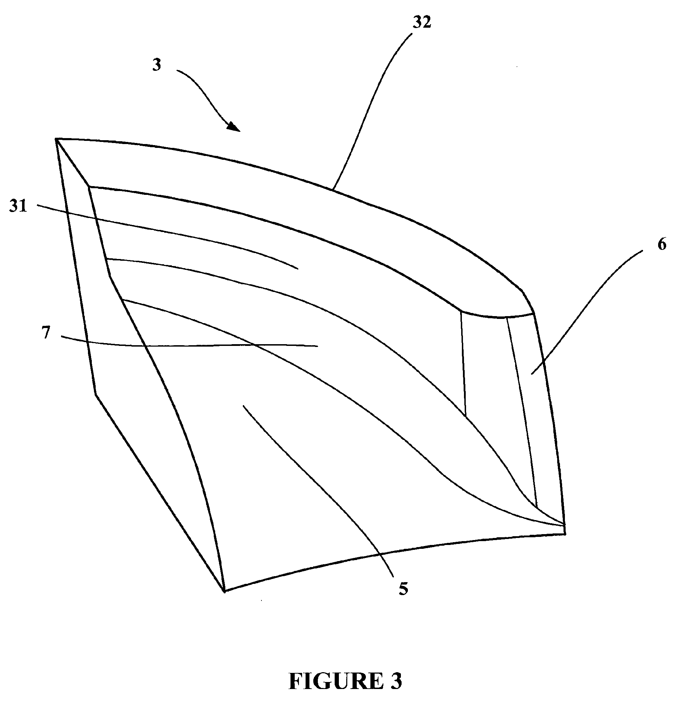

La figure 3 présente une vue en perspective d'une extrémité axialement extérieure de barrette d'un pneumatique selon l'invention. A partir de l'extrémité axialement extérieure 6 de barrette, la face d'attaque 31 est convexe, avec un centre de courbure positionné en arrière de la face d'attaque 31, du côté de la face de fuite 32, puis, après une inversion de courbure, elle devient au moins en partie concave, avec un centre de courbure positionné en avant de la face d'attaque 31, du côté opposé de la face de fuite 32. Le raccordement de la face d'attaque 31 avec l'extrémité axiale 6 se fait sans arête vive. De même le raccordement entre la face d'attaque 31 et la surface de fond 5 se fait par une surface de raccordement 7 sans arête vive. L'absence de toute arête vive en extrémité axialement extérieure de barrette évite de bloquer toute extrémité de chaume dans cette zone.

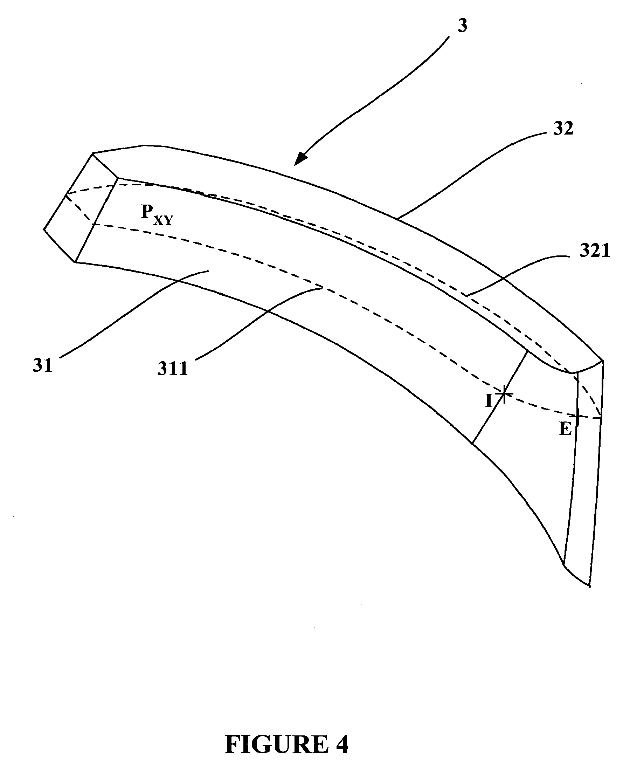

La figure 4 présente une vue en perspective d'une barrette 3 d'un pneumatique selon l'invention, avec ses faces d'attaque 31 et de fuite 32. En pointillés, est représentée une coupe axiale de la barrette 3 selon un plan axial P_{XY}, parallèle à l'axe de rotation du pneumatique. Le profil d'attaque 311 est défini par l'intersection de la face d'attaque 31 avec le plan axial P_{xy}. Le profil de fuite 321 est défini par l'intersection de la face d'attaque 32 avec le plan axial P_{xy}. Les points E et I sont respectivement le point le plus axialement extérieur et le point d'inflexion du profil d'attaque 311.

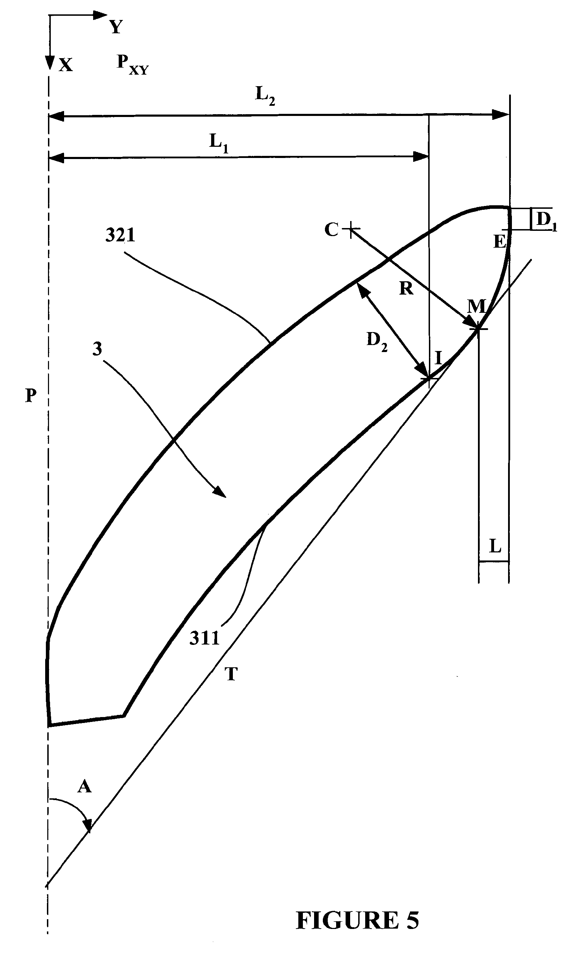

La figure 5 présente une coupe dans un plan axial P_{xy} d'une barrette d'un pneumatique selon l'invention. Selon la direction circonférentielle X, la barrette 3 s'étend entre le profil d'attaque 311 et le profil de fuite 321. Selon la direction axiale Y, le profil d'attaque 311 comprend, au voisinage de l'extrémité axialement extérieure de la barrette, un point E le plus axialement extérieur, positionné à une distance axiale L₂ du plan équatorial P du pneumatique, et un point d'inflexion I, positionné à une distance axiale L₁ du plan équatorial P du pneumatique. En tout point M axialement positionné entre le point E et I, la tangente T au profil d'attaque 311 fait un angle A par rapport au plan équatorial P. L'angle A de la tangente T augmente continûment quand la distance axiale L du point M au point E le plus axialement extérieur augmente. La courbure en tout point M axialement positionné entre les points E et I est définie par le centre de courbure C et le rayon de courbure R. Selon l'invention, la courbure en tout point M est convexe, c'est-à-dire telle que le centre de courbure est positionné circonférentiellement en arrière du profil d'attaque 311, du coté du profil de fuite 321. Au point d'inflexion I, la courbure au profil d'attaque 311 s'annule pour changer de sens en tout point axialement intérieur au point d'inflexion I, le centre de courbure étant alors positionné circonférentiellement en avant du profil d'attaque 311, du côté opposé au profil de fuite 321.

L'invention a été plus particulièrement étudiée pour un pneumatique agricole de dimension 520/85 R 42. Pour cette dimension d'étude, dans un plan axial donné, la distance axiale du point d'inflexion d'un profil d'attaque, par rapport au plan équatorial du pneumatique, est comprise entre 0.8 fois et 0.95 fois la distance axiale du point le plus axialement extérieur, par rapport au plan équatorial du pneumatique. Le rayon de courbure en un point positionné axialement entre le point axialement le plus extérieur et le point d'inflexion est au moins égal 24 mm, donc à 0.4 fois la hauteur de barrette, celle-ci étant égale à 60 mm.

Pour quantifier l'efficacité technique de l'invention, les inventeurs ont comparé le nombre moyen d'impacts provoqués par les extrémités de chaume dans la portion axialement extérieure convexe de la face d'attaque d'une barrette, sur plusieurs barrettes, entre un pneu de référence et un pneu selon l'invention. Ils ont constaté un gain de 30% en nombre moyen d'impacts pour le pneumatique selon l'invention par rapport au pneumatique de référence.

Le principe d'une inversion de courbure au voisinage de l'extrémité axialement extérieure de barrette peut être étendu à la face de fuite d'une barrette.

La présente invention peut être étendue à des bandes de roulement, comprenant plus de 2 rangées de barrettes.

L'invention peut également être une solution technique à tout problème d'agressions d'une barrette par tout indenteur ayant un comportement similaire à un chaume, c'est-à-dire un indenteur présentant une mobilité en rotation autour d'une extrémité fixe ancrée dans le sol, une extrémité libre acérée et agressive et une rigidité axiale suffisante pour pouvoir perforer le mélange élastomériqure de la barrette.

L'invention peut enfin être généralisée à tout pneumatique dont la bande de roulement comprend des éléments en relief et susceptible de rouler sur des sols comprenant des indenteurs agressifs, tel qu'un pneumatique pour véhicule de génie civil.

## Revendications

1. Pneumatique (1) pour véhicule à usage agricole comprenant:
- une bande de roulement (2) comprenant une pluralité de barrettes (3, 4),
- une barrette (3) s'étendant radialement vers l'extérieur à partir d'une surface de fond (5) de la bande de roulement (2) sur une hauteur de barrette (H), axialement vers l'intérieur à partir d'une extrémité axiale (6) de la bande de roulement (2) et circonférentiellement, selon un sens de rotation préférentiel du pneumatique (1), entre une face d'attaque (31) et une face de fuite (32),
- une barrette (3) comprenant, dans tout plan axial (P_{xy}) parallèle à l'axe de rotation du pneumatique, un profil d'attaque (311), intersection de la face d'attaque (31) et du plan axial (P_{xy}), et un profil de fuite (321), intersection de la face de fuite (32) et du plan axial (P_{xy}),
**caractérisé en ce que** l'angle (A) de la droite (T) tangente au profil d'attaque (311), en un point (M) du profil d'attaque (311), par rapport à un plan équatorial (P) du pneumatique passant par le milieu de la bande de roulement (2), augmente continûment, à partir d'un point (E) le plus axialement extérieur du profil d'attaque (311), lorsque la distance axiale (L) entre le point (M) du profil d'attaque et le point (E) le plus axialement extérieur du profil d'attaque (311) augmente, **en ce que** l'angle (A) atteint une valeur maximale (Aₘ) en un point d'inflexion (I) du profil d'attaque (311) et **en ce que** le rayon de courbure (R) en tout point (M) du profil d'attaque (311), positionné axialement entre le point (E) le plus axialement extérieur et le point d'inflexion (I), est au moins égal à 0.4 fois la hauteur (H) de barrette (31).

2. Pneumatique (1) selon la revendication 1, **caractérisé en ce que** la distance axiale (L₁) entre le point d'inflexion (I) du profil d'attaque (311) et le plan équatorial (P) du pneumatique est au moins égale à 0.8 fois la distance axiale (L₂) entre le point (E) le plus axialement extérieur du profil d'attaque (311) et le plan équatorial (P) du pneumatique.

3. Pneumatique (1) selon l'une des revendications 1 ou 2, **caractérisé en ce que** la distance axiale (L₁) entre le point d'inflexion (I) du profil d'attaque (311) et le plan équatorial (P) du pneumatique est au plus égale à 0.95 fois la distance axiale (L₂) entre le point (E) le plus axialement extérieur du profil d'attaque (311) et le plan équatorial (P) du pneumatique.

4. Pneumatique (1) selon l'une quelconque des revendications 1 à 3, **caractérisé en ce que** la distance circonférentielle (D1) entre le point (E) le plus axialement extérieur du profil d'attaque (311) et le profil de fuite (321) est au plus égale à 0.5 fois la distance (D2) entre le point d'inflexion (I) du profil d'attaque (311) et le profil de fuite (321), mesurée perpendiculairement au profil de fuite (321).

5. Pneumatique (1) selon l'une quelconque des revendications 1 à 4, **caractérisé en ce que** l'angle (A) de la droite (T) tangente au profil d'attaque (311), au point (E) le plus axialement extérieur du profil d'attaque (311), par rapport au plan équatorial (P) du pneumatique, est au plus égal à 5°.

6. Pneumatique (1) selon l'une quelconque des revendications 1 à 5, **caractérisé en ce que** l'angle (A) de la droite (T) tangente au profil d'attaque (311), au point d'inflexion (I) du profil d'attaque (311), par rapport au plan équatorial (P) du pneumatique, est au moins égal à 40°, de préférence au moins égal à 45°.

7. Pneumatique (1) selon l'une quelconque des revendications 1 à 6, **caractérisé en ce que** l'angle (A) de la droite (T) tangente au profil d'attaque (311), au point d'inflexion (I) du profil d'attaque (311), par rapport au plan équatorial (P) du pneumatique, est au plus égal à 75°, de préférence au plus égal à 55°.

8. Pneumatique (1) selon l'une quelconque des revendications 1 à 7, **caractérisé en ce que** la face d'attaque (31) est reliée à la surface de fond (5) par un raccordement continu et tangent à la surface de fond (5).

9. Pneumatique (1) l'une quelconque des revendications 1 à 8, **caractérisé en ce que** la pluralité de barrettes est constituée d'une première et d'une seconde rangées de barrettes (3, 4) disposées en chevrons par rapport au plan équatorial (P) du pneumatique.

## Patentansprüche

1. Luftreifen (1) für landwirtschaftlich genutztes Fahrzeug, umfassend:
- eine Lauffläche (2), die eine Vielzahl von Stegen (3, 4) umfasst,
- wobei sich ein Steg (3) von einer Bodenfläche (5) der Lauffläche (2) aus über eine Steghöhe (H) radial nach außen, von einem Axialende (6) der Lauffläche (2) aus axial nach innen und umfangsmäßig in einer bevorzugten Drehrichtung des Luftreifens (1) zwischen einer Vorderseite (31) und einer Hinterseite (32) erstreckt,
- wobei ein Steg (3) in jeder Axialebene (P_{xy}) parallel zur Drehachse des Luftreifens ein Vorderprofil (311), das der Schnittpunkt der Vorderseite (31) und der Axialebene (P_{xy}) ist, und ein Hinterprofil (321), das der Schnittpunkt der Hinterseite (32) und der Axialebene (P_{xy}) ist, umfasst,
**dadurch gekennzeichnet, dass** der Winkel (A) der Berührungslinie (T) am Vorderprofil (311) an einem Punkt (M) des Vorderprofils (311) im Verhältnis zu einer Äquatorebene (P) des Luftreifens, die durch die Mitte der Lauffläche (2) geht, stetig von einem axial äußersten Punkt (E) des Vorderprofils (311) aus zunimmt, wenn der Axialabstand (L) zwischen dem Punkt (M) des Vorderprofils und dem axial äußersten Punkt (E) des Vorderprofils (311) zunimmt, dass der Winkel (A) einen Höchstwert (Aₘ) an einem Wendepunkt (I) des Vorderprofils (311) erreicht, und dass der Krümmungsradius (R) an jedem Punkt (M) des Vorderprofils (311), der axial zwischen dem axial äußersten Punkt (E) und dem Wendepunkt (I) positioniert ist, mindestens gleich 0,4-mal die Höhe (H) des Stegs (31) ist.

2. Luftreifen (1) nach Anspruch 1, **dadurch gekennzeichnet, dass** der Axialabstand (L₁) zwischen dem Wendepunkt (I) des Vorderprofils (311) und der Äquatorebene (P) des Luftreifens mindestens gleich 0,8-mal der Axialabstand (L₂) zwischen dem axial äußersten Punkt (E) des Vorderprofils (311) und der Äquatorebene (P) des Luftreifens ist.

3. Luftreifen (1) nach einem der Ansprüche 1 oder 2, **dadurch gekennzeichnet, dass** der Axialabstand (L₁) zwischen dem Wendepunkt (I) des Vorderprofils (311) und der Äquatorebene (P) des Luftreifens höchstens gleich 0,95-mal der Axialabstand (L₂) zwischen dem axial äußersten Punkt (E) des Vorderprofils (311) und der Äquatorebene (P) des Luftreifens ist.

4. Luftreifen (1) nach einem der Ansprüche 1 bis 3, **dadurch gekennzeichnet, dass** der Umfangsabstand (D1) zwischen dem axial äußersten Punkt (E) des Vorderprofils (311) und dem Hinterprofil (321) höchstens gleich 0,5-mal der Abstand (D2) zwischen dem Wendepunkt (I) des Vorderprofils (311) und dem Hinterprofil (321) ist, und zwar rechtwinklig zum Hinterprofil (321) gemessen.

5. Luftreifen (1) nach einem der Ansprüche 1 bis 4, **dadurch gekennzeichnet, dass** der Winkel (A) der Berührungslinie (T) am Vorderprofil (311) an dem axial äußersten Punkt (E) des Vorderprofils (311) im Verhältnis zur Äquatorebene (P) des Luftreifens höchstens gleich 5° ist.

6. Luftreifen (1) nach einem der Ansprüche 1 bis 5, **dadurch gekennzeichnet, dass** der Winkel (A) der Berührungslinie (T) am Vorderprofil (311) am Wendepunkt (I) des Vorderprofils (311) im Verhältnis zur Äquatorebene (P) des Luftreifens mindestens gleich 40°, bevorzugt mindestens gleich 45° ist.

7. Luftreifen (1) nach einem der Ansprüche 1 bis 6, **dadurch gekennzeichnet, dass** der Winkel (A) der Berührungslinie (T) am Vorderprofil (311) am Wendepunkt (I) des Vorderprofils (311) im Verhältnis zur Äquatorebene (P) des Luftreifens höchstens gleich 75°, bevorzugt höchstens gleich 55° ist.

8. Luftreifen (1) nach einem der Ansprüche 1 bis 7, **dadurch gekennzeichnet, dass** die Vorderseite (31) mit der Bodenfläche (5) durch eine durchgehende und die Bodenfläche (5) berührende Verbindung verbunden ist.

9. Luftreifen (1) nach einem der Ansprüche 1 bis 8, **dadurch gekennzeichnet, dass** die Vielzahl von Stegen aus einer ersten und einer zweiten Reihe von Stegen (3, 4) besteht, die im Verhältnis zur Äquatorebene (P) des Luftreifens V-förmig angeordnet sind.

## Claims

1. Tyre (1) for a vehicle for agricultural use, comprising:
- a tread (2) comprising a plurality of bars (3, 4),
- a bar (3) extending radially outwards from a base surface (5) of the tread (2) over a bar height (H), axially towards the inside from an axial end (6) of the tread (2) and circumferentially, in a preferred direction of rotation of the tyre (1), between a leading face (31) and a trailing face (32),
- a bar (3) comprising, in any axial plane (P_{xy}) parallel to the axis of rotation of the tyre, a leading profile (311), the intersection of the leading face (31) and of the axial plane (P_{xy}), and a trailing profile (321), the intersection of the trailing face (32) and of the axial plane (P_{xy}),
**characterized in that** the angle (A) of the straight line (T) tangential to the leading profile (311) at a point (M) on the leading profile (311), with respect to an equatorial plane (P) of the tyre passing through the middle of the tread (2), increases continuously from an axially outermost point (E) of the leading profile (311), when the axial distance (L) between the point (M) of the leading profile and the axially outermost point (E) of the leading profile (311) increases, **in that** the angle (A) reaches a maximum value (Aₘ) at a point of inflection (I) of the leading profile (311), and **in that** the radius of curvature (R) at any point (M) on the leading profile (311), positioned axially between the axially outermost point (E) and the point of inflection (I), is at least equal to 0.4 times the height (H) of the bar (31).

2. Tyre (1) according to Claim 1, **characterized in that** the axial distance (L₁) between the point of inflection (I) of the leading profile (311) and the equatorial plane (P) of the tyre is at least equal to 0.8 times the axial distance (L₂) between the axially outermost point (E) of the leading profile (311) and the equatorial plane (P) of the tyre.

3. Tyre (1) according to either of Claims 1 and 2, **characterized in that** the axial distance (L₁) between the point of inflection (I) of the leading profile (311) and the equatorial plane (P) of the tyre is at most equal to 0.95 times the axial distance (L₂) between the axially outermost point (E) of the leading profile (311) and the equatorial plane (P) of the tyre.

4. Tyre (1) according to any one of Claims 1 to 3, **characterized in that** the circumferential distance (D1) between the axially outermost point (E) of the leading profile (311) and the trailing profile (321) is at most equal to 0.5 times the distance (D2) between the point of inflection (I) of the leading profile (311) and the trailing profile (321), measured perpendicular to the trailing profile (321).

5. Tyre (1) according to any one of Claims 1 to 4, **characterized in that** the angle (A) of the straight line (T) tangential to the leading profile (311) at the axially outermost point (E) of the leading profile (311), with respect to the equatorial plane (P) of the tyre, is at most equal to 5°.

6. Tyre (1) according to any one of Claims 1 to 5, **characterized in that** the angle (A) of the straight line (T) tangential to the leading profile (311) at the point of inflection (I) of the leading profile (311), with respect to the equatorial plane (P) of the tyre, is at least equal to 40°, preferably at least equal to 45°.

7. Tyre (1) according to any one of Claims 1 to 6, **characterized in that** the angle (A) of the straight line (T) tangential to the leading profile (311) at the point of inflection (I) of the leading profile (311), with respect to the equatorial plane (P) of the tyre, is at most equal to 75°, preferably at most equal to 55°.

8. Tyre (1) according to any one of Claims 1 to 7, **characterized in that** the leading face (31) is connected to the base surface (5) by a connection that is continuous and tangential to the base surface (5).

9. Tyre (1) according to any one of Claims 1 to 8, **characterized in that** the plurality of bars is made up of a first and of a second row of bars (3, 4) which are arranged in a chevron pattern with respect to the equatorial plane (P) of the tyre.
